# EUROPEAN PATENT SPECIFICATION

(11) **EP 3 290 597 B1**
(45) Date of publication and mention of the grant of the patent: **12.04.2023**
(21) Application number: 17187385.4
(22) Date of filing: 23.08.2017
(51) Int. Cl.: E02F 9/22, F15B 11/17

(54) **METHOD OF CONTROLLING A MAIN CONTROL VALVE OF AN EXCAVATOR AND APPARATUS FOR PERFORMING THE SAME**
VERFAHREN ZUR STEUERUNG EINES HAUPTSTEUERVENTILS EINES BAGGERS UND VORRICHTUNG ZUR DURCHFÜHRUNG DES VERFAHRENS
PROCÉDÉ DE COMMANDE D'UNE SOUPAPE DE COMMANDE PRINCIPALE D'UN EXCAVATEUR ET APPAREIL À CET EFFET

(30) Priority: 06.09.2016 KR 20160114233
(43) Date of publication of application: 07.03.2018
(73) Proprietor: Hyundai Doosan Infracore Co., Ltd., Incheon (KR)
(72) Inventor: KIM, Ki-Yong, Seoul 06216 (KR); AHN, Hyeon-Sik, Seoul 05555 (KR); JUNG, Woo-Yong, Seoul 08090 (KR); KIM, Chang-Mook, Gyeonggi-do 13128 (KR)
(74) Representative: Isarpatent

(56) References cited:
- EP-A2- 1 672 127
- JP-A- H10 176 347
- JP-A- S58 146 629
- KR-B1- 100 923 396
- US-A1- 2016 252 107

## Description

### BACKGROUND

### 1. Field

Example embodiments relate to a method of controlling a main control valve of an excavator and an apparatus for performing the same. More particularly, example embodiments relate to a method of controlling a main control valve configured to operate a boom and an arm of an excavator, and an apparatus for performing the method.

### 2. Description of the Related Art

Generally, a boom and an arm of an excavator may be operated by a flux. The flux may be transferred to the boom and the arm from a hydraulic pump through a main control valve. A recent excavator may include a first hydraulic pump and a second hydraulic pump. Thus, the main control valve may include first and second boom control spools arranged between the first and second hydraulic pumps and a boom cylinder, and first and second arm control spools arranged between the first and second hydraulic pumps and an arm cylinder.

According to related arts, when the boom or the arm may be separately operated, a first flux generated from the first hydraulic pump and a second flux generated from the second hydraulic pump may be supplied to the boom cylinder or the arm cylinder through the first and second boom control spools or the first and second arm control spools.

When the boom and the arm may be simultaneously operated, the first flux may be partially supplied to the arm cylinder through the second arm control spool and the second flux may be partially supplied to the boom cylinder through the second boom control spool.

Therefore, when the boom and the arm may be simultaneously operated, a part of the first flux may pass through the second arm control spool and a part of the second flux may pass through the second boom control spool so that pressure loss may be generated.

US 2016/0252107 A1 discloses a hydraulic excavator drive system which includes: a first hydraulic pump and a second hydraulic pump, whose respective tilting angles are controllable independently of each other; an arm main control valve and an arm auxiliary control valve each for controlling supply of hydraulic oil to an arm cylinder; and a boom main control valve and a boom auxiliary control valve each for controlling supply of the hydraulic oil to a boom cylinder.

### SUMMARY

The present application provides a method of controlling a main control valve of an excavator, as defined in the appended set of claims, that may be capable of reducing pressure loss.

According to example embodiments, when the boom and the arm may be simultaneously operated, the first flux may be supplied to the boom cylinder through only the first boom control spool and the second flux may be supplied to the arm cylinder through only the first arm control spools. Particularly, the second arm control spool and/or the second boom control spool may be selectively controlled by handling the boom joystick and/or the arm joystick. Therefore, a pressure loss caused by passing of the flux through the second boom control spool and the second arm control spool may be reduced.

### BRIEF DESCRIPTION OF THE DRAWINGS

Example embodiments will be more clearly understood from the following detailed description taken in conjunction with the accompanying drawings. FIGS. 1 to 5 represent non-limiting, example embodiments as described herein.
FIG. 1 is a hydraulic circuit diagram illustrating a method of controlling a main control valve when only a boom is operated in accordance with example embodiments;
FIG. 2 is a hydraulic circuit diagram illustrating a method of controlling a main control valve when only an arm is operated in accordance with example embodiments;
FIG. 3 is a hydraulic circuit diagram illustrating a method of controlling a main control valve when fluxes are separately supplied to the boom and the arm without passing of the fluxes through a join spool in accordance with example embodiments;
FIG. 4 is a hydraulic circuit diagram illustrating a method of controlling a main control valve when a relatively great amount of the flux is supplied to the boom cylinder to increase a speed of the boom in accordance with example embodiments; and
FIG. 5 is a hydraulic circuit diagram illustrating a method of controlling a main control valve when a relatively great amount of the flux is supplied to the arm cylinder to increase a speed of the arm in accordance with example embodiments.

### DETAILED DESCRIPTION OF THE EMBODIMENTS

Various example embodiments will be described more fully hereinafter with reference to the accompanying drawings, in which some example embodiments are shown. The present invention may, however, be embodied in many different forms and should not be construed as limited to the example embodiments set forth herein. Rather, these example embodiments are provided so that this disclosure will be thorough and complete, and will fully convey the scope of the present invention to those skilled in the art. In the drawings, the sizes and relative sizes of layers and regions may be exaggerated for clarity.

It will be understood that when an element or layer is referred to as being "on," "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

The terminology used herein is for the purpose of describing particular example embodiments only and is not intended to be limiting of the present invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Example embodiments are described herein with reference to cross-sectional illustrations that are schematic illustrations of idealized example embodiments (and intermediate structures). As such, variations from the shapes of the illustrations as a result, for example, of manufacturing techniques and/or tolerances, are to be expected. Thus, example embodiments should not be construed as limited to the particular shapes of regions illustrated herein but are to include deviations in shapes that result, for example, from manufacturing. For example, an implanted region illustrated as a rectangle will, typically, have rounded or curved features and/or a gradient of implant concentration at its edges rather than a binary change from implanted to non-implanted region. Likewise, a buried region formed by implantation may result in some implantation in the region between the buried region and the surface through which the implantation takes place. Thus, the regions illustrated in the figures are schematic in nature and their shapes are not intended to illustrate the actual shape of a region of a device and are not intended to limit the scope of the present invention.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, example embodiments will be explained in detail with reference to the accompanying drawings.

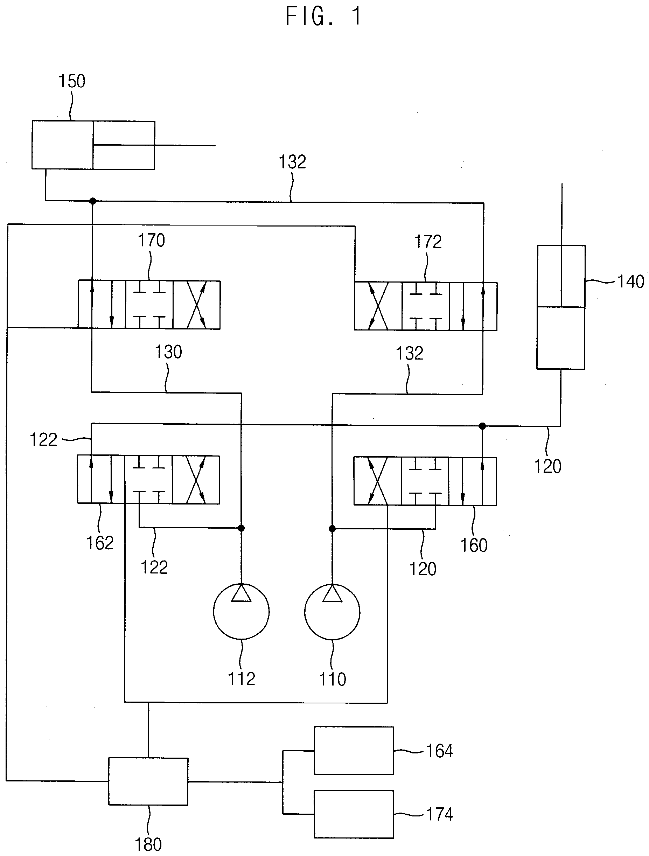

FIG. 1 is a hydraulic circuit diagram illustrating a method of controlling a main control valve when only a boom is operated in accordance with example embodiments.

Referring to FIG. 1, an excavator may include a first hydraulic pump 110, a second hydraulic pump 112, a main control valve, a boom cylinder 140 and an arm cylinder 150.

The first hydraulic pump 110 may be configured to generate a first flux. The second hydraulic pump 120 may be configured to generate a second flux. In example embodiments, the first flux and the second flux may have substantially the same pressure. Alternatively, the first flux and the second flux may have different pressures.

The main control valve may be arranged between the first and second hydraulic pumps 110 and 112 and the boom and arm cylinders 140 and 150. The main control valve may be configured to selectively supply the first and second fluxes to the boom cylinder 140 and the arm cylinder 150.

The boom cylinder 140 may be connected with a boom. The boom cylinder 140 may be configured to supply the first flux and/or the second flux to the boom. The arm cylinder 150 may be connected with an arm. The arm cylinder 150 may be configured to supply the first flux and/or the second flux to the arm.

The first hydraulic pump 110 may be connected with the boom cylinder 140 through a first boom line 120. The second hydraulic pump 120 may be connected with the boom cylinder 140 through a second boom line 122.

The second hydraulic pump 120 may be connected with the arm cylinder 150 through a first arm line 130. The first hydraulic pump 110 may be connected with the arm cylinder 150 through a second arm line 132.

The main control valve may include a first boom control spool 160, a second boom control spool 162, a first arm control spool 170 and a second arm control spool 172.

The first boom control spool 160 may be installed on the first boom line 120. The second boom control spool 162 may be installed on the second boom line 122. The first boom control spool 160 and the second boom control spool 162 may be controlled by control signals of a controller 180 in accordance with handling directions and handling strokes of a boom joystick 164.

The first arm control spool 170 may be installed on the first arm line 130. The second arm control spool 172 may be installed on the second arm line 132. The first arm control spool 170 and the second arm control spool 172 may be controlled by control signals of the controller 180 in accordance with handling directions and handling strokes of an arm joystick 174.

When only the boom may be operated, the first arm control spool 170 and the second arm control spool 172 may be closed by the control signal of the controller 180 in accordance with handling of the arm joystick 174. In contrast, the first boom control spool 160 and the second boom control spool 162 may be opened by the control signal of the controller 180 in accordance with handling of the boom joystick 164. Thus, 100% of the first flux generated from the first hydraulic pump 110 may be transferred to the boom cylinder 140 through the first boom line 120. Further, 100% of the second flux generated from the second hydraulic pump 112 may be transferred to the boom cylinder 140 through the second boom line 122. As a result, because all of the first flux and the second flux may be supplied to the boom cylinder 140, a total flux supplied to the boom cylinder 140 may be a sum of 100% of the first flux and 100% of the second flux.

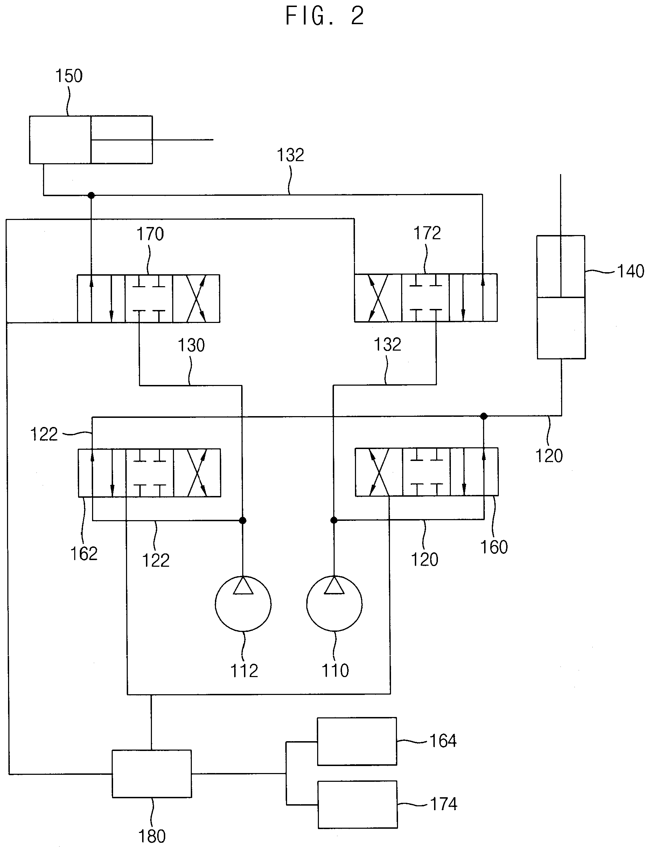

FIG. 2 is a hydraulic circuit diagram illustrating a method of controlling a main control valve when only an arm is operated in accordance with example embodiments.

When only the arm may be operated, the first boom control spool 160 and the second boom control spool 162 may be closed by the control signal of the controller 180 in accordance with handling of the boom joystick 164. In contrast, the first arm control spool 170 and the second arm control spool 172 may be opened by the control signal of the controller 180 in accordance with handling of the arm joystick 174. Thus, 100% of the first flux generated from the first hydraulic pump 110 may be transferred to the arm cylinder 150 through the first arm line 130. Further, 100% of the second flux generated from the second hydraulic pump 112 may be transferred to the arm cylinder 150 through the second arm line 132. As a result, because all of the first flux and the second flux may be supplied to the arm cylinder 150, a total flux supplied to the arm cylinder 150 may be a sum of 100% of the first flux and 100% of the second flux.

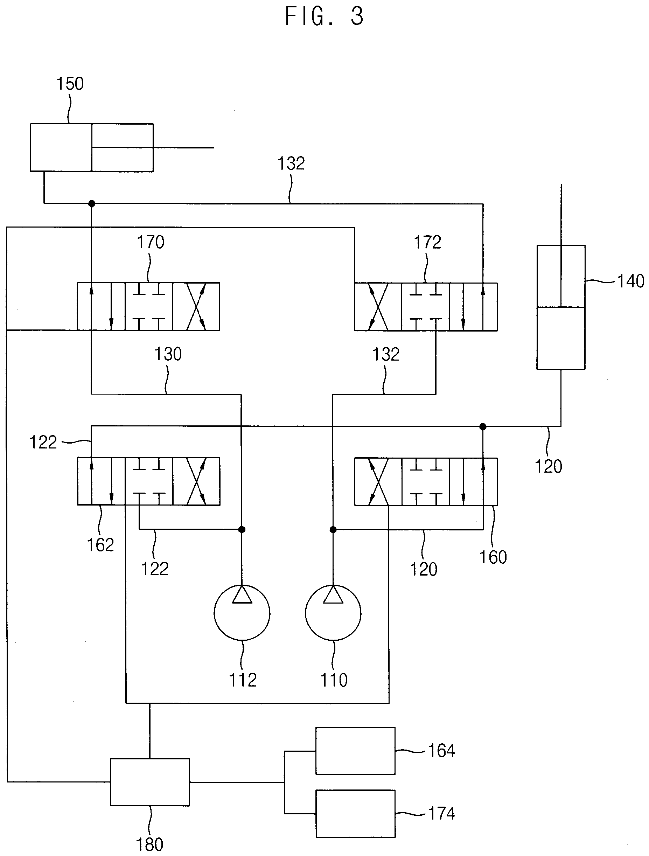

FIG. 3 is a hydraulic circuit diagram illustrating a method of controlling a main control valve when fluxes are separately supplied to the boom and the arm without passing of the fluxes through a join spool in accordance with example embodiments.

When the speeds of the boom and the arm may be increased, the second arm control spool 172 and the second boom control spool 162 may be closed by the control signal of the controller 180 in accordance with handlings of the boom joystick 164 and the arm joystick 174. In contrast, the first boom control spool 160 and the first arm control spool 170 may be opened by the control signal of the controller 180 in accordance with handlings of the boom joystick 164 and the arm joystick 174. Thus, the first flux generated from the first hydraulic pump 110 may not be supplied to the arm cylinder 150. The first flux may be supplied to only the boom cylinder 140 through the first boom line 120. Further, the second flux generated from the second hydraulic pump 112 may not be supplied to the boom cylinder 140. The second flux may be supplied to only the arm cylinder 150 through the first arm line 130.

Therefore, when the speeds of the boom and the arm may be increased, the hydraulic circuit connected with the boom cylinder may be separated from the hydraulic circuit connected with the arm cylinder 150. The first flux generated from the first hydraulic pump 110 may be supplied to the boom cylinder 140 through only one first boom control spool 160. The second flux generated from the second hydraulic pump 112 may be supplied to the arm cylinder 150 through only one first arm control spool 170. As a result, a pressure loss caused by passing of the fluxes through the second control spools may be reduced.

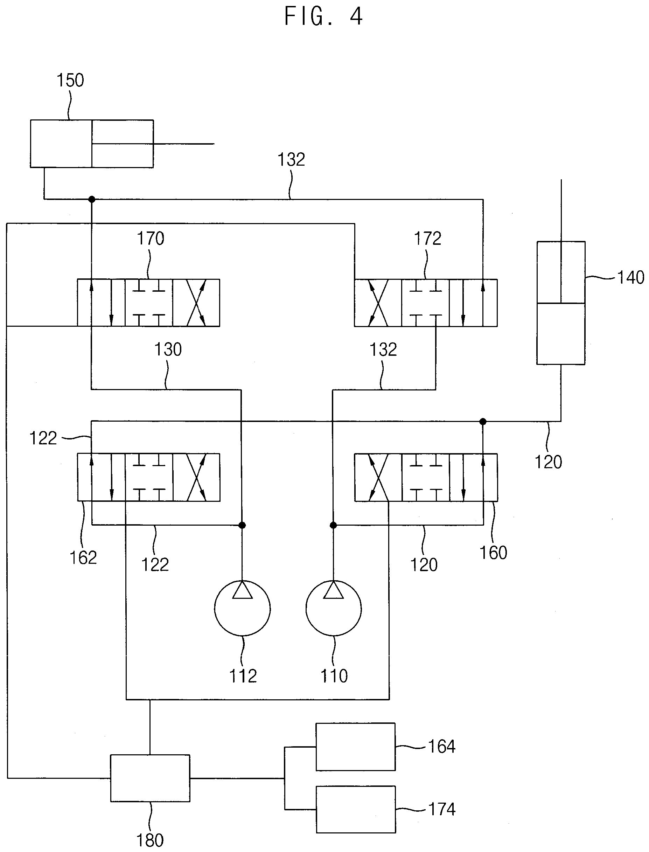

FIG. 4 is a hydraulic circuit diagram illustrating a method of controlling a main control valve when a relatively great amount of the flux is supplied to the boom cylinder to increase a speed of the boom in accordance with example embodiments.

When the speed of the arm may be decreased so as to provide the boom with the speed faster than the speed of the arm, a worker may handle the boom joystick 164 in an increasing direction or the arm joystick 174 in a decreasing direction. The controller 180 may determine the increasing of the speed of the boom to close the second arm control spool 172. In contrast, the first boom control spool 160 and the first arm control spool 170 may be opened. The second boom control spool 162 may be partially opened. Thus, the first flux generated from the first hydraulic pump 110 may not be supplied to the arm cylinder 150. The first flux may be supplied to the boom cylinder 140 through the first boom line 112. Further, a great part of the second flux generated from the second hydraulic pump 112 may be supplied to the arm cylinder 150 through the first arm line 130. A part of the second flux may be supplied to the boom cylinder 140 through the second boom line 122.

Therefore, a total flux supplied to the boom cylinder 140 may be a sum of 100% of the first flux and the part of the second flux. Further, a total flux supplied to the arm cylinder 150 may be the great part of the second flux except for the part of the second flux passing through the second boom line 122. As a result, because the total flux supplied to the boom cylinder 140 may be higher than the total flux supplied to the arm cylinder 150, the speed of the boom may be increased and the speed of the arm may be decreased.

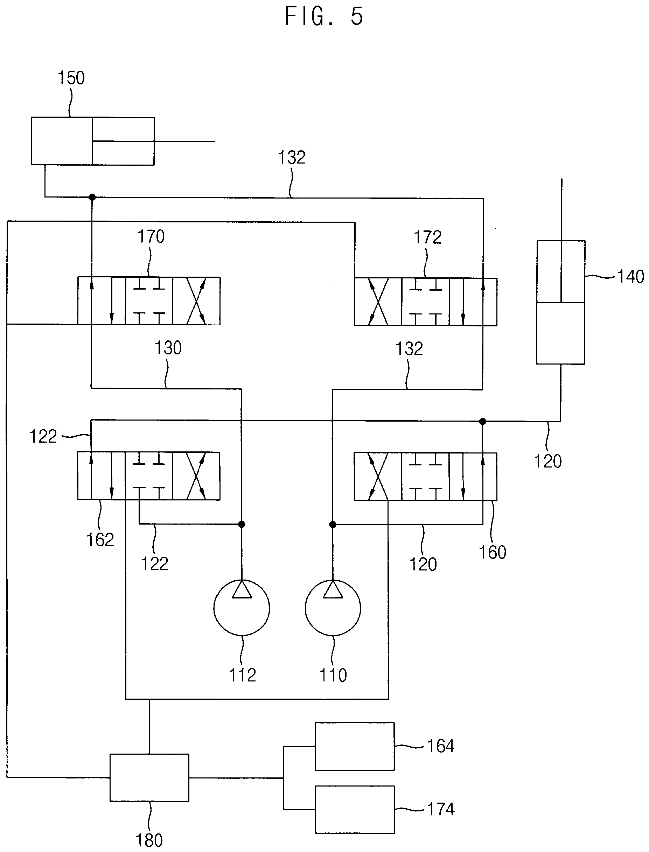

FIG. 5 is a hydraulic circuit diagram illustrating a method of controlling a main control valve when a relatively great amount of the flux is supplied to the arm cylinder to increase a speed of the arm in accordance with example embodiments.

When the speed of the boom may be decreased so as to provide the arm with the speed faster than the speed of the boom, a worker may handle the boom joystick 164 in the decreasing direction or the arm joystick 174 in the increasing direction. The controller 180 may determine the increasing of the speed of the arm to close the second boom control spool 162. In contrast, the first boom control spool 160 and the first arm control spool 170 may be opened. The second arm control spool 172 may be partially opened. Thus, a great part of the first flux generated from the first hydraulic pump 110 may be supplied to the boom cylinder 140 through the first boom line 120. A part of the first flux may be supplied to the arm cylinder 150 through the second arm line 132. Further, the second flux generated from the second hydraulic pump 112 may not be supplied to the boom cylinder 140. The second flux may be supplied to the arm cylinder 150 through the first arm line 130.

Further, the boom joystick 164 may be partially handled compared than the arm joystick 174. After partially handling the boom joystick 164, when the boom joystick 164 may be handled in the decreasing direction with stopping of the arm joystick 174, the second boom control spool 162 may be closed. In contrast, the first boom control spool 160 and the first arm control spool 170 may be opened. The second arm control spool 172 may be partially opened.

Therefore, a total flux supplied to the arm cylinder 150 may be a sum of 100% of the second flux and the part of the first flux. Further, a total flux supplied to the boom cylinder 140 may be the great part of the first flux except for the part of the first flux passing through the second arm line 132. As a result, because the total flux supplied to the arm cylinder 150 may be higher than the total flux supplied to the boom cylinder 140, the speed of the arm may be increased and the speed of the boom may be decreased.

As mentioned above, after the speeds of the boom cylinder 140 and the arm cylinder 150 may be increased by handling the boom joystick 164 and the arm joystick 174, the controller 180 may selectively open/close the first and second boom control spools 160 and 162 and the first and second arm control spools 170 and 172 in accordance with the handling directions of any one of the boom joystick 164 and the arm joystick 174 so that the pressure loss may be reduced.

According to example embodiments, when the boom and the arm may be simultaneously operated, the first flux may be supplied to the boom cylinder through only the first boom control spool and the second flux may be supplied to the arm cylinder through only the first arm control spools. Particularly, the second arm control spool and/or the second boom control spool may be selectively controlled by handling the boom joystick and/or the arm joystick. Therefore, the pressure loss caused by passing of the flux through the second boom control spool and the second arm control spool may be reduced.

The foregoing is illustrative of example embodiments and is not to be construed as limiting thereof. Although a few example embodiments have been described, those skilled in the art will readily appreciate that many modifications are possible in the example embodiments without materially departing from the novel teachings and advantages of the present invention. Accordingly, all such modifications are intended to be included within the scope of the present invention as defined in the claims. In the claims, means-plus-function clauses are intended to cover the structures described herein as performing the recited function and not only structural equivalents but also equivalent structures. Therefore, it is to be understood that the foregoing is illustrative of various example embodiments and is not to be construed as limited to the specific example embodiments disclosed, and that modifications to the disclosed example embodiments, as well as other example embodiments, are intended to be included within the scope of the appended claims.

## Claims

1. A method of controlling a main control valve of an excavator by handling a boom joystick (164) and an arm joystick (174), the method comprising:
closing a second arm control spool (172) between a first hydraulic pump (110) and the arm cylinder (150);
opening a first boom control spool (160) between the first hydraulic pump (110) and the boom cylinder (140) to supply a first flux generated from the first hydraulic pump (110) to the boom cylinder (140);
closing a second boom control spool (162) between a second hydraulic pump (112) and the boom cylinder (140); and
opening a first arm control spool (170) between the second hydraulic pump (112) and the arm cylinder (150) to supply a second flux generated from the second hydraulic pump (112) to the arm cylinder (150),
the method being **characterized in that** it further comprises:
partially opening the second arm control spool (172) to supply a part of the first flux to the arm cylinder (150) when the boom joystick (164) is handled in a decreasing direction of the speed of the boom or the arm joystick (174) is handled in an increasing direction of the speed of the arm.

2. The method of claim 1, wherein supplying the second flux to the arm cylinder (150) comprises partially opening the second boom control spool (162) to supply a part of the second flux to the boom cylinder (140).

3. The method of claim 1, further comprising partially opening the second boom control spool (162) to supply a part of the second flux to the boom cylinder (140) when the boom joystick (164) is handled in an increasing direction of the speed of boom or the arm joystick (174) is handled in a decreasing direction of the speed of the arm.

4. The method of claim 1, further comprising selectively controlling opening/closing of the first and second boom control spools (160, 162) and the first and second arm control spools (170, 172) by handling any one of the boom joystick (164) and the arm joystick (174) in an increasing direction of speed or a decreasing direction of speed after increasing the speeds of the boom cylinder (140) and the arm cylinder (150) by handling the boom joystick (164) and the arm joystick (174).

5. An apparatus for controlling a main control valve of an excavator, the apparatus comprising:
a boom joystick (164) configured to operate a first boom control spool (160) between a first hydraulic pump (110) and a boom cylinder (140) and a second boom control spool (162) between the boom cylinder (140) and a second hydraulic pump (112);
an arm joystick (174) configured to operate a first arm control spool (170) between the second hydraulic pump (112) and an arm cylinder (150) and a second arm control spool (172) between the arm cylinder (150) and the first hydraulic pump (110); and
a controller (180) configured to selectively supply a first flux generated from the first hydraulic pump (110) and a second flux generated from the second hydraulic pump (112) to the first and second boom control spools (160, 162) and the first and second arm control spools (170, 172) in accordance with handling directions and handling strokes of the boom joystick (164) and the arm joystick (174),
wherein the controller is configured to close the second arm control spool (172) and open the first boom control spool (160) to supply the first flux to the boom cylinder (140), and to close the second boom control spool (162) and open the first arm control spool (170) to supply the second flux to the arm cylinder (150) when speeds of the boom cylinder (140) and the arm cylinder (150) are increased by handling the boom joystick (164) and the arm joystick (174),
the apparatus being **characterized in that** the controller (180) is further configured for;
partially opening the second arm control spool (172) to supply a part of the first flux to the arm cylinder (150) when the boom joystick (164) is handled in a decreasing direction of the speed of the boom or the arm joystick (174) is handled in an increasing direction of the speed of the arm.

6. The apparatus of claim 5, wherein the controller (180) is further configured to partially open the second boom control spool (162) to supply a part of the second flux to the boom cylinder (140) when the boom joystick (164) is handled in an increasing direction of speed of the boom or the arm joystick (174) is handled in a decreasing direction of speed of the arm.

7. The apparatus of claim 5, wherein the controller (180) is further configured to selectively control opening/closing of the first and second boom control spools (160, 162) and the first and second arm control spools (170, 172) by handling any one of the boom joystick (164) and the arm joystick (174) in an increasing direction of speed or a decreasing direction of speed after increasing the speeds of the boom cylinder (140) and the arm cylinder (150) by handling the boom joystick (164) and the arm joystick (174).

## Patentansprüche

1. Verfahren zum Steuern eines Hauptsteuerventils eines Baggers durch Betätigen eines Ausleger-Joysticks (164) und eines Arm-Joysticks (174), wobei das Verfahren umfasst:
Schließen eines zweiten Armsteuerschiebers (172) zwischen einer ersten Hydraulikpumpe (110) und dem Armzylinder (150) ;
Öffnen eines ersten Auslegersteuerschiebers (160) zwischen der ersten Hydraulikpumpe (110) und dem Auslegerzylinder (140), um dem Auslegerzylinder (140) einen von der ersten Hydraulikpumpe (110) generierten ersten Fluss zuzuführen;
Schließen eines zweiten Auslegersteuerschiebers (162) zwischen einer zweiten Hydraulikpumpe (112) und dem Auslegerzylinder (140); und
Öffnen eines ersten Armsteuerschiebers (170) zwischen der zweiten Hydraulikpumpe (112) und dem Armzylinder (150), um dem Armzylinder (150) einen von der zweiten Hydraulikpumpe (112) generierten zweiten Fluss zuzuführen,
wobei das Verfahren **dadurch gekennzeichnet ist, dass** es des Weiteren umfasst:
teilweises Öffnen des zweiten Armsteuerschiebers (172), um dem Armzylinder (150) einen Teil des ersten Flusses zuzuführen, wenn der Ausleger-Joystick (164) in einer Richtung der abnehmenden Geschwindigkeit des Auslegers betätigt wird oder der Arm-Joystick (174) in einer Richtung der zunehmenden Geschwindigkeit des Arms betätigt wird.

2. Verfahren nach Anspruch 1, wobei das Zuführen des zweiten Flusses zu dem Armzylinder (150) das teilweise Öffnen des zweiten Auslegersteuerschiebers (162) umfasst, um dem Auslegerzylinder (140) einen Teil des zweiten Flusses zuzuführen.

3. Verfahren nach Anspruch 1, des Weiteren umfassend ein teilweises Öffnen des zweiten Auslegersteuerschiebers (162), um dem Auslegerzylinder (140) einen Teil des zweiten Flusses zuzuführen, wenn der Ausleger-Joystick (164) in einer Richtung der zunehmenden Geschwindigkeit des Auslegers betätigt wird oder der Arm-Joystick (174) in einer Richtung der abnehmenden Geschwindigkeit des Arms betätigt wird.

4. Verfahren nach Anspruch 1, des Weiteren umfassend das selektive Steuern des Öffnens/Schließens des ersten und des zweiten Auslegersteuerschiebers (160, 162) und des ersten und des zweiten Armsteuerschiebers (170, 172) durch Betätigen des Ausleger-Joysticks (164) oder des Arm-Joysticks (174) in einer Richtung der zunehmenden Geschwindigkeit oder einer Richtung der abnehmenden Geschwindigkeit nach dem Erhöhen der Geschwindigkeiten des Auslegerzylinders (140) und des Armzylinders (150) durch Betätigen des Ausleger-Joysticks (164) und des Arm-Joysticks (174).

5. Vorrichtung zum Steuern eines Hauptsteuerventils eines Baggers, wobei die Vorrichtung umfasst:
einen Ausleger-Joystick (164), der dafür eingerichtet ist, einen ersten Ausleger-Steuerschieber (160) zwischen einer ersten Hydraulikpumpe (110) und einem Auslegerzylinder (140) und einen zweiten Ausleger-Steuerschieber (162) zwischen dem Auslegerzylinder (140) und einer zweiten Hydraulikpumpe (112) zu betätigen;
einen Arm-Joystick (174), der dafür eingerichtet ist, einen ersten Armsteuerschieber (170) zwischen der zweiten Hydraulikpumpe (112) und einem Armzylinder (150) und einen zweiten Armsteuerschieber (172) zwischen dem Armzylinder (150) und der ersten Hydraulikpumpe (110) zu betätigen; und einen Controller (180), der dafür eingerichtet ist, dem ersten und dem zweiten Ausleger-Steuerschieber (160, 162) und dem ersten und dem zweiten Arm-Steuerschieber (170, 172) selektiv gemäß Betätigungsrichtungen und Betätigungshüben des Ausleger-Joysticks (164) und des Arm-Joysticks (174) einen von der ersten Hydraulikpumpe (110) generierten ersten Fluss und einen von der zweiten Hydraulikpumpe (112) generierten zweiten Fluss zuzuführen, wobei der Controller dafür eingerichtet ist, den zweiten Arm-Steuerschieber (172) zu schließen und den ersten Ausleger-Steuerschieber (160) zu öffnen, um dem Auslegerzylinder (140) den ersten Fluss zuzuführen, und den zweiten Ausleger-Steuerschieber (162) zu schließen und den ersten Arm-Steuerschieber (170) zu öffnen, um dem Armzylinder (150) den zweiten Fluss zuzuführen, wenn die Geschwindigkeiten des Auslegerzylinders (140) und des Armzylinders (150) durch Betätigen des Ausleger-Joysticks (164) und des Arm-Joysticks (174) erhöht werden,
wobei die Vorrichtung **dadurch gekennzeichnet ist, dass** der Controller (180) des Weiteren eingerichtet ist zum:
teilweisen Öffnen des zweiten Armsteuerschiebers (172), um dem Armzylinder (150) einen Teil des ersten Flusses zuzuführen, wenn der Ausleger-Joystick (164) in einer Richtung der abnehmenden Geschwindigkeit des Auslegers betätigt wird oder der Arm-Joystick (174) in einer Richtung der zunehmenden Geschwindigkeit des Arms betätigt wird.

6. Vorrichtung nach Anspruch 5, wobei der Controller (180) des Weiteren dafür eingerichtet ist, den zweiten Ausleger-Steuerschieber (162) teilweise zu öffnen, um dem Auslegerzylinder (140) einen Teil des zweiten Flusses zuzuführen, wenn der Ausleger-Joystick (164) in einer Richtung der zunehmenden Geschwindigkeit des Auslegers betätigt wird oder der Arm-Joystick (174) in einer Richtung der abnehmenden Geschwindigkeit des Arms betätigt wird.

7. Vorrichtung nach Anspruch 5, wobei der Controller (180) des Weiteren dafür eingerichtet ist, das Öffnen/Schließen des ersten und des zweiten Auslegersteuerschiebers (160, 162) und des ersten und des zweiten Armsteuerschiebers (170, 172) durch Betätigen des Ausleger-Joysticks (164) oder des Arm-Joysticks (174) in einer Richtung der zunehmenden Geschwindigkeit oder einer Richtung der abnehmenden Geschwindigkeit nach dem Erhöhen der Geschwindigkeiten des Auslegerzylinders (140) und des Armzylinders (150) durch Betätigen des Ausleger-Joysticks (164) und des Arm-Joysticks (174) zu steuern.

## Revendications

1. Procédé de commande d'une soupape de commande principale d'une excavatrice en manipulant un manche à balai de flèche (164) et un manche à balai de bras (174), le procédé comprenant de :
fermer un second tiroir de commande de bras (172) entre une première pompe hydraulique (110) et le vérin de bras (150) ;
ouvrir un premier tiroir de commande de flèche (160) entre la première pompe hydraulique (110) et le vérin de flèche (140) pour fournir un premier flux généré à partir de la première pompe hydraulique (110) au vérin de flèche (140) ;
fermer un second tiroir de commande de flèche (162) entre une seconde pompe hydraulique (112) et le vérin de flèche (140) ; et
ouvrir un premier tiroir de commande de bras (170) entre la seconde pompe hydraulique (112) et le vérin de bras (150) pour fournir un second flux généré à partir de la seconde pompe hydraulique (112) au vérin de bras (150),
le procédé étant **caractérisé en ce qu'**il comprend en outre de :
ouvrir partiellement le second tiroir de commande de bras (172) pour fournir une partie du premier flux au vérin de bras (150) lorsque le manche à balai de flèche (164) est manipulé dans une direction de diminution de la vitesse de la flèche ou que le manche à balai de bras (174) est manipulé dans une direction d'augmentation de la vitesse du bras.

2. Procédé selon la revendication 1, dans lequel la fourniture du second flux au vérin de bras (150) comprend l'ouverture partielle du second tiroir de commande de flèche (162) pour fournir une partie du second flux au vérin de flèche (140).

3. Procédé selon la revendication 1, comprenant en outre l'ouverture partielle du second tiroir de commande de flèche (162) pour fournir une partie du second flux au vérin de flèche (140) lorsque le manche à balai de flèche (164) est manipulé dans une direction d'augmentation de la vitesse de la flèche ou que le manche à balai de bras (174) est manipulé dans une direction de diminution de la vitesse du bras.

4. Procédé selon la revendication 1, comprenant en outre la commande sélective de l'ouverture/la fermeture des premier et second tiroirs de commande de flèche (160, 162) et des premier et second tiroirs de commande de bras (170, 172) en manipulant l'un quelconque du manche à balai de flèche (164) et du manche à balai de bras (174) dans une direction d'augmentation de la vitesse ou une direction de diminution de la vitesse après avoir augmenté les vitesses du vérin de flèche (140) et du vérin de bras (150) en manipulant le manche à balai de flèche (164) et le manche à balai de bras (174) .

5. Appareil destiné à commander une soupape de commande principale d'une excavatrice, l'appareil comprenant :
un manche à balai de flèche (164) configuré pour actionner un premier tiroir de commande de flèche (160) entre une première pompe hydraulique (110) et un vérin de flèche (140) et un second tiroir de commande de flèche (162) entre le vérin de flèche (140) et une seconde pompe hydraulique (112) ;
un manche à balai de bras (174) configuré pour actionner un premier tiroir de commande de bras (170) entre la seconde pompe hydraulique (112) et un vérin de bras (150) et un second tiroir de commande de bras (172) entre le vérin de bras (150) et la première pompe hydraulique (110) ; et
un contrôleur (180) configuré pour fournir sélectivement un premier flux généré à partir de la première pompe hydraulique (110) et un second flux généré à partir de la seconde pompe hydraulique (112) aux premier et second tiroirs de commande de flèche (160, 162) et aux premier et
second tiroirs de commande de bras (170, 172) en fonction des directions de manipulation et des courses de manipulation du manche à balai de flèche (164) et du manche à balai de bras (174),
dans lequel le contrôleur est configuré pour fermer le second tiroir de commande de bras (172) et ouvrir le premier tiroir de commande de flèche (160) pour fournir le premier flux au vérin de flèche (140), et pour fermer le second tiroir de commande de flèche (162) et ouvrir le premier tiroir de commande de bras (170) pour fournir le second flux au vérin de bras (150) lorsque les vitesses du vérin de flèche (140) et du vérin de bras (150) sont augmentées en manipulant le manche à balai de flèche (164) et le manche à balai de bras (174),
l'appareil étant **caractérisé en ce que** le contrôleur (180) est en outre configuré pour :
ouvrir partiellement le second tiroir de commande de bras (172) pour fournir une partie du premier flux au vérin de bras (150) lorsque le manche à balai de flèche (164) est manipulé dans une direction de diminution de la vitesse de la flèche ou que le manche à balai de bras (174) est manipulé dans une direction d'augmentation de la vitesse du bras.

6. Appareil selon la revendication 5, dans lequel le contrôleur (180) est en outre configuré pour ouvrir partiellement le second tiroir de commande de flèche (162) pour fournir une partie du second flux au vérin de flèche (140) lorsque le manche à balai de flèche (164) est manipulé dans une direction d'augmentation de la vitesse de la flèche ou le manche à balai de bras (174) est manipulé dans une direction de diminution de la vitesse du bras.

7. Appareil selon la revendication 5, dans lequel le contrôleur (180) est en outre configuré pour commander sélectivement l'ouverture/la fermeture des premier et second tiroirs de commande de flèche (160, 162) et des premier et second tiroirs de commande de bras (170, 172) en manipulant l'un quelconque du manche à balai de flèche (164) et du manche à balai de bras (174) dans une direction d'augmentation de la vitesse ou une direction de diminution de la vitesse après avoir augmenté les vitesses du vérin de flèche (140) et du vérin de bras (150) en manipulant le manche à balai de flèche (164) et le manche à balai de bras (174) .
